# EUROPÄISCHE PATENTSCHRIFT

(11) **EP 2 189 921 B1**
(45) Veröffentlichungstag und Bekanntmachung des Hinweises auf die Patenterteilung: **23.05.2012**
(21) Anmeldenummer: 09014390.0
(22) Anmeldetag: 18.11.2009
(51) Int. Cl.: G06F 21/00, G01R 31/00

(54) **Diagnosegerät zur Verbindung mit einem Kraftfahrzeug**
Diagnosis device for connection to a motor vehicle
Appareil de diagnostic destiné à la connexion avec un véhicule automobile

(30) Priorität: 21.11.2008 EP 08020287
(43) Veröffentlichungstag der Anmeldung: 26.05.2010
(73) Patentinhaber: ads-tec GmbH, 70771 Leinfelden-Echterdingen (DE)
(72) Erfinder: Speidel, Thomas, 71706 Markgröningen (DE)
(74) Vertreter: Wasmuth, Rolf

(56) Entgegenhaltungen:
- EP-A- 1 715 459
- WO-A-2008/064821
- WO-A-2009/146921
- WOLF M ET AL: "Embedded Security in Cars - Securing Current and Future Automotive IT Applications - Part II: Secure In-Vehicle communication" EMBEDDED SECURITY IN CARS : SECURING CURRENT AND FUTURE AUTOMOTIVE IT APPLICATIONS, SPRINGER BERLIN HEIDELBERG, [Online] 28. März 2006 (2006-03-28), Seiten 95-109, XP002509799 ISBN: 978-3-540-28428-4 Gefunden im Internet: URL:http://www.springerlink.com/content/x8 q6260026m8676m/> [gefunden am 2009-01-08]

## Beschreibung

Die Erfindung betrifft ein Diagnosegerät zur Verbindung mit einem Kraftfahrzeug, um mit dem elektronischen Steuergerät des Kraftfahrzeuges zu kommunizieren, damit Servicearbeiten ausgeführt, Software upgedatet und/oder Fehlerspeicher ausgelesen werden können.

Die Technik in Kraftfahrzeugen umfasst einen großen Teil der Elektronik, beginnend mit der Motorsteuerung über Antiblockiersysteme und Assistenzsysteme bis hin zur Navigation und Audio- und Videosysteme. Die Elektrik des Fahrzeugs kommuniziert über Bus-Systeme wie z. B. ein CAN-Bus, ein K-Line-Bus oder Ethernet. Im Service sind nicht nur die sicherheitsrelevanten Systeme zu überprüfen, sondern die gesamte Fahrzeugkommunikation. Hierzu werden in der Werkstatt PC's, insbesondere Tablett PC's eingesetzt, die über einen Adapter für die Kraftfahrzeugelektronik an einen Kommunikationsanschluss des Kraftfahrzeugs angeschlossen werden. Auf dem PC werden vom Servicetechniker Diagnoseprogramme gestartet, deren Ergebnisse Anlass für die Durchführung von Servicearbeiten sind.

Als Werkstattcomputer werden handelsübliche PC's eingesetzt, die für ihren Einsatz in der Werkstatt entsprechend konfektioniert sind. In die Struktur des PC's wird dabei nicht eingegriffen, weshalb es einem Benutzer grundsätzlich möglich ist, neben der werkstatttypischen Software auch untypische Software aufzuspielen und zu nutzen. Dies kann zu Kompatibilitätsproblemen führen und den Betrieb des PC's beeinträchtigen. Während der Absturz eines instabil gewordenen PC's bei Anwendung typischer Software meist ohne gravierende Folgen bleibt, hat ein Absturz des zum Flashen von Steuergeräten verwendeten PC's erhebliche Folgen; wird ein Flashvorgang irregulär abgebrochen, ist das elektronische Gerät meist nicht mehr verwendbar und muss komplett ausgetauscht werden.

Ist ein Werkstatt PC defekt und muss gegen einen neuen ausgetauscht werden, muss - meist vor Ort - die jeweilige Software in der zugelassenen Version neu aufgespielt und eingestellt werden.

Aus der EP 1 467 269 A1 ist eine als PC ausgebildete Datenverarbeitungsvorrichtung bekannt, die aus einem BIOS, einem Prozessor und einem Arbeitsspeicher sowie einem Massenspeicher wie einer Festplatte zum Speichern eines Betriebssystems und Anwendungsprogrammen besteht. Ferner ist ein Schreib-/Leseeinheit zum Lesen einer Speicherkarte wie einer Smart Card vorgesehen, wobei auf der Smart Card spezifische Kenndaten gespeichert sind. Über eine Netzwerkschnittstelle kann unter Verwendung der auf der Speicherkarte abgelegten spezifischen Kenndaten eine Netzwerkverbindung zu einem Backend System wie einem Server aufgebaut werden, um von diesem die für einen Betrieb der Datenverarbeitungsvorrichtung notwendige Betriebssoftware oder Anwendungssoftware über eine nicht sichere Datenverbindung herunter zu laden. Wird der Aufbau einer verschlüsselten Netzwerkverbindung gewünscht, ist dies erst nach dem Laden des Standardbetriebssystems möglich. Die verwendeten Firewalls müssen die über die aufgebaute Verbindung empfangenen Daten zulassen, um z. B. Updatefunktionen des Betriebssystems ausführen zu können. Damit ist grundsätzlich ein unberechtigter Zugriff auf das laufende Standardbetriebssystem und damit dessen Manipulation möglich.

Aus der EP 1 715 459 A2 ist ein Diagnosegerät zur Verbindung mit einem Steuergerät in einem Kraftfahrzeug bekannt, welches aus einem PC-Kern, aus einem Prozessor sowie einem Arbeitsspeicher und einem Massenspeicher zum Speichern von Datenfiles eines Betriebssystems besteht. Mit dem PC-Kern ist eine Leseeinheit für eine Smart Card verbunden, auf der systemspezifische Kenndaten gespeichert sind. Eine im Diagnosegerät vorgesehene Kraftfahrzeugelektronik dient zur elektrischen Kommunikation mit dem Kraftfahrzeug und umfasst eine von einem Kommunikationsprozessor gesteuerte Schnittstelle zur Umsetzung der zwischen der Kraftfahrzeugelektronik und dem Steuergerät auszutauschenden Daten. Über eine Netzwerkschnittstelle kann das Diagnosegerät eine Netzwerkverbindung zu einem fernen Server aufbauen, um Datenfiles zum Betrieb des Diagnosegerätes herunterzuladen.

Die WO 2009/146921 A1 beschreibt ein Diagnosesteuergerät für ein Kraftfahrzeug, das über eine äußere, authentifizierte Verbindung mit einem Service-Center kommuniziert.

Die Literaturstelle Wolf et al. "Embedded Security in Cars" vom 28. März 2006 beschreibt Maßnahmen zur sicheren Kommunikation innerhalb des Systems eines Kraftfahrzeugs.

Der Erfindung liegt die Aufgabe zugrunde, ein Diagnosegerät zur Verbindung mit einem Kraftfahrzeug derart auszubilden, dass ausschließlich zugelassene Diagnosesoftware eine Kommunikation mit einem Steuergerät im Kraftfahrzeug aufbauen kann, ohne dass Manipulationen durch einen Dritten möglich sind.

Die Aufgabe wird erfindungsgemäß nach den kennzeichnenden Merkmalen des Anspruchs 1 gelöst.

Das Diagnosegerät besteht aus einem im Gehäuse des Diagnosegerätes vorgesehenen PC-Kern, aus einem Prozessor sowie einem Arbeitsspeicher und einem Massenspeicher zum Speichern von Datenfiles eines Betriebssystems. Das Diagnosegerät umfasst eine mit dem PC-Kern verbundene Leseeinheit für eine Smart Card, auf der systemspezifische Kenndaten und/oder Zertifikate gespeichert sind. Zur elektrischen Kommunikation mit dem Kraftfahrzeug ist eine Kraftfahrzeugelektronik vorgesehen, die eine von einem Kommunikationsprozessor gesteuerte Schnittstelle zur Umsetzung der zwischen der Kraftfahrzeugelektronik und dem Steuergerät auszutauschenden Daten umfasst. Ferner ist eine Netzwerkschnittstelle zum Aufbau einer Netzwerkverbindung zu einem Server vorgesehen, der Datenfiles zum Betrieb des Diagnosegerätes bereitstellt, wobei der PC-Kern und die Kraftfahrzeugelektronik in einem gemeinsamen, staub- und feuchtigkeitsdicht geschlossenen Gehäuse angeordnet sind. Die Kraftfahrzeugelektronik kommuniziert mit dem PC-Kern gehäuseintern über eine verschlüsselte Verbindung, die durch einen Schlüssel eines Hardwarebausteins in der Kraftfahrzeugelektronik und einem Sicherheitszertifikat auf der Smart Card hergestellt ist.

Das Diagnosegerät besteht nicht mehr aus einem offenen PC, der durch den Benutzer in beliebiger Weise genutzt werden kann, sondern nur noch aus einem PC-Kern, der als embedded PC im geschlossenen Gehäuse des Diagnosegerätes aufgenommen ist. Die Kraftfahrzeugelektronik ist ebenfalls im Gehäuse des Diagnosegerätes aufgenommen, so dass der PC-Kern und die Kraftfahrzeugelektronik eine gemeinsame Baueinheit bilden. Ein auf dem PC-Kern durch externe Befehle zu startendes Diagnoseprogramm kann aber mit der Kraftfahrzeugelektronik nur dann eine Verbindung aufbauen, wenn zum Aufbau einer internen sicheren Verbindung ein zertifizierter Schlüssel zwischen der Kraftfahrzeugelektronik und dem PC-Kern ausgetauscht ist. Hierzu ist der Hardwarebaustein wie ein Logikbaustein in der Kraftfahrzeugelektronik vorgesehen sowie auf der Smart Card ein Zertifikat gespeichert, das vom PC-Kern auslesbar oder generierbar ist.

Die verschlüsselte Verbindung zwischen dem PC-Kern und der Kraftfahrzeugelektronik stellt sicher, dass nur zugelassene Diagnoseprogramme auf das jeweils angeschlossene Steuergerät zugreifen können. Ist ein Diagnoseprogramm geladen, das keine Zugangsberechtigung zu einem angeschlossenen Steuergerät hat, kommt keine interne verschlüsselte Verbindung zustande, so dass ein unberechtigter Zugriff auf das Steuergerät sicher verhindert ist.

Die Baueinheit aus PC-Kern und Kraftfahrzeugelektronik ist durch eine Steckverbindung hergestellt, so dass sowohl der PC-Kern als auch die Kraftfahrzeugelektronik getrennt voneinander austauschbar sind. Dabei bilden der PC-Kern und die Kraftfahrzeugelektronik eine gemeinsame embedded Plattform.

Zur Anzeige der Ergebnisse der im Diagnosegerät ablaufenden Diagnoseprogramme und/oder zur Befehlseingabe ist das Diagnosegerät über eine drahtlose Verbindung mit einem externen Bildschirm und/oder einer externen Tastatur verbunden. Zweckmäßig wird hierzu über ein Remote Protokoll kommuniziert.

Um eine gute drahtlose Verbindung zu gewährleisten, ist innerhalb des Gehäuses mindestens eine Antenne vorgesehen; vorzugsweise sind im Gehäuse je eine Antenne in jeder Raumrichtung angeordnet.

Zur Abfuhr der im geschlossenen Gehäuse anfallenden Wärme ist an einer Längsseite des Gehäuses des Diagnosegerätes ein von einem Kühlluftstrom durchströmter Kühlkanal ausgebildet, der ein Ende einer in das dichte Gehäuse führenden Heatpipe kühlt. Das im Gehäuse liegende Ende der Heatpipe steht dabei in wärmeübertragender Verbindung mit der inneren Wärmequelle, z. B. dem Prozessor des PC-Kerns.

Zur Spannungsversorgung ist an einer Längsseite des Gehäuses ein Aufnahmefach für einen Akkupack angeordnet. Der Akkupack ist an eine Stromsteuereinheit angeschlossen, deren weitere Eingänge aus dem Bordnetz des Kraftfahrzeugs und/oder von einem Netzteil gespeist sind. Dadurch wird eine gleichzeitige Stromversorgung aus mehreren Stromquellen möglich. Um Ausgleichsströme zwischen den Quellen zu vermeiden, ist vorgesehen, dass die Stromsteuereinheit eine von Erde getrennte Masse aufweist, deren Potenzial veränderlich ist.

In Weiterbildung des Diagnosegerätes ist in einem bootfähigen Permanentspeicher ein Startbetriebssystem abgespeichert, das beim Booten des PC-Kerns des Diagnosegerätes in den Prozessor geladen wird. Dieses Startbetriebssystem baut zunächst eine Kommunikationsverbindung mit der Schreib-/Leseeinheit und der darin vorzugsweise auswechselbar eingeschobenen Smart Card auf. Über das in den Prozessor geladene Startbetriebssystem wird dann eine Netzwerkverbindung zu dem Backend System wie dem Server hergestellt; dabei werden die mittels den aus der Kommunikation mit der Smart Card erhaltenen Informationen verwendet, um eine sichere, verschlüsselte SSL-Verbindung mit dem Server herzustellen, wobei über die hergestellte sichere, verschlüsselte Netzwerkverbindung die Datenfiles in den Massenspeicher des Diagnosegerätes zu laden sind, die zum Betrieb des Diagnosegerätes im bestimmungsgemäßen Anwendungsfall erforderlich sind.

Gegenüber den bekannten Systemen besteht der Vorteil darin, dass das Diagnosegerät nicht im angreifbaren "Normalmodus" betrieben werden muss, wie z. B. ein PC unter einem Standardbetriebssystem, sondern das Startbetriebssystem abgekoppelt von einem Standardbetriebssystem eine sichere Verbindung mit dem Update- oder Datenserver herstellen kann. Da das Startbetriebssystem auf einem internen Permanentspeicher abgelegt ist, der im Betrieb des Startbetriebssystem vorzugsweise nicht zu beschreiben ist, können Manipulationen an dem Startbetriebssystem weitgehend ausgeschlossen werden. Die empfangenen Daten werden anhand der Informationen der Smart Card geprüft und nur dann zugelassen, wenn die Authentizität der Daten geprüft ist. Dies erfolgt z. B. über einen im Kryptobereich der Smart Card abgelegten Private Key bzw. ein entsprechendes Zertifikat.

Auf der Smart Card ist ein Kryptoprozessor integriert, wobei im Kryptobereich der Smart Card das Verbindungszertifikat für die sichere SSL-Verbindung ebenso abgelegt sein kann wie weitere Zertifikate oder Keys. Da auf die Schreib-/Leseeinheit und die darin befindliche Smart Card sowohl unter dem Startbetriebssystem als auch unter einem Standardbetriebssystem des Diagnosegeräts zugegriffen werden kann, ergeben sich eine Vielzahl von Vorteilen sowohl im Betrieb des Diagnosegeräts unter dem Startbetriebssystem als auch unter dem Standardbetriebssystem. So kann unter dem Standardbetriebssystem der Kryptoprozessor der Smart Card zur Verschlüsselung von Datenfiles und Ordnern eines Benutzers genutzt werden, die auf dem Massenspeicher des Systems abgelegt werden, z. B. auf einer Festplatte oder einer Speicherkarte bzw. einem festen oder auswechselbaren Speicherbaustein. Unter Zuhilfenahme der Verschlüsselung über den Kryptoprozessor der Smart Card können auch authentische Log-Files erstellt werden. Diese Protokoll-Files führen alle oder ausgewählte Aktivitäten des Benutzers auf und können aufgrund der Verschlüsselung nicht verändert werden.

Das Startbetriebssystem ist vorteilhaft auf einem in dem Diagnosegerät integrierten Speicher abgespeichert, z. B. auf einem Flashspeicher, einem Eprom oder dgl.. Der integrierte Speicher ist unter einem Standardbetriebssystem als versteckter Speicher nicht als Laufwerk angezeigt und daher vom Benutzer nicht zu beschreiben, zweckmäßig mit einem Schreibschutz gegen Beschreiben gesichert.

Vorteilhaft kann der integrierte Speicher auch ein Speicherbaustein, z. B. ein bootfähiger USB Stick sein. Insbesondere kann der bootfähige USB Stick auch die Schreib-/Leseeinheit enthalten, so dass durch Einstecken in einen USB Anschluss eines beliebigen PC's und Booten von dem USB Stick das Startbetriebssystem mit weitgehend allen Sicherheitsfeatures genutzt werden kann.

Das Startbetriebssystem ist bevorzugt eine Open Source Software, z. B. LINUX, wobei das Standardbetriebssystem ein anderes System sein kann, z. B. meist ein WINDOWS Betriebssystem ist. Sind im Kryptobereich der Smart Card Zertifikate gespeichert bzw. generiert, ist die Auslegung so vorgesehen, dass diese Zertifikate unter beiden Betriebssystemen für das System zugänglich und lesbar sind.

Nach einem Verfahren zum inkrementalen Update einer Software im PC-Kern und/oder der Kraftfahrzeugelektronik in einem Diagnosegerät wird von einem Master-System des Diagnosegerätes eine Vektortabelle der Speicherorte der Programmfiles auf dem Massenspeicher erstellt und die Vektortabelle gespeichert. Diese Vektortabelle wird dem Client zur Verfügung gestellt, um die vom Server geladene Software entsprechend der Vektortabelle auf dem Massenspeicher abzulegen. Für ein Update wird nun die Vektortabelle des Clients mit der Vektortabelle des Masters verglichen und nur die Programmfiles und Attribute upgedatet, die beim Master eine Änderung erfahren haben. Hervorzuheben ist, dass für das Update das Standardbetriebssystem ebenso wenig gestartet sein muss wie die Anwendungssoftware.

Weitere Merkmale der Erfindung ergeben sich aus den weiteren Ansprüchen, der Beschreibung und der Zeichnung, in der nachfolgend im Einzelnen beschriebene Ausführungsbeispiele der Erfindung dargestellt sind. Es zeigen:
- Fig. 1: in schematischer Darstellung ein erfindungsgemäß aus- gebildetes Diagnosegerät,
- Fig. 2: in schematischer Darstellung einen bootfähigen USB Stick mit integrierter Schreib-/Leseeinheit für eine Smart Card,

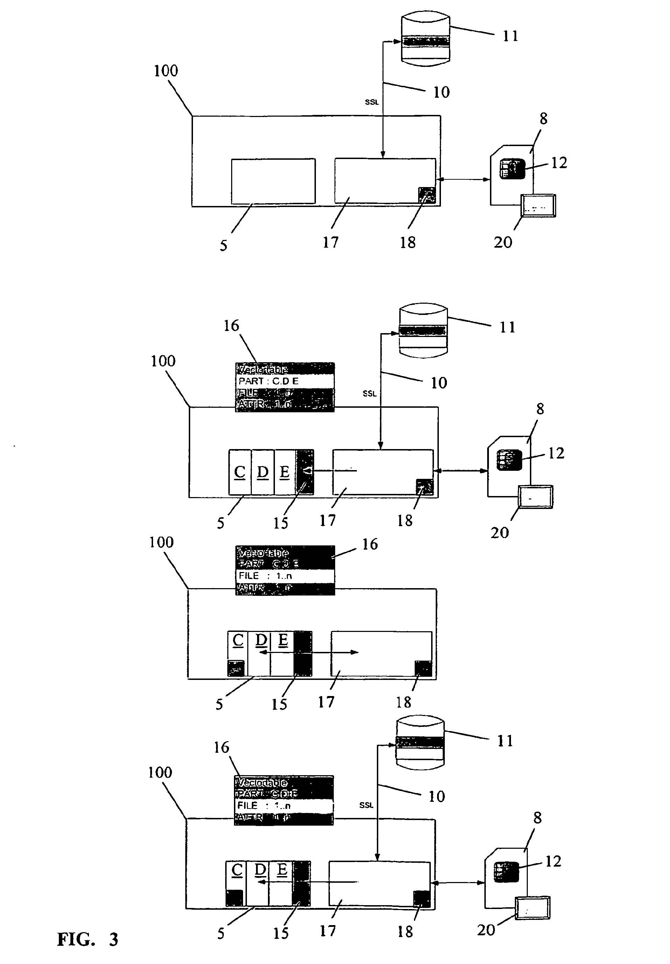

- Fig. 3: eine schematische Darstellung zum inkrementalen Up- date von Software,
- Fig. 4: in schematischer Darstellung das an ein Kraftfahrzeug angeschlossene Diagnosegerät,
- Fig. 5: eine Ansicht eines erfindungsgemäßen Diagnosegerätes,
- Fig. 6: eine isometrische Darstellung des Diagnosegerätes nach Fig. 5.

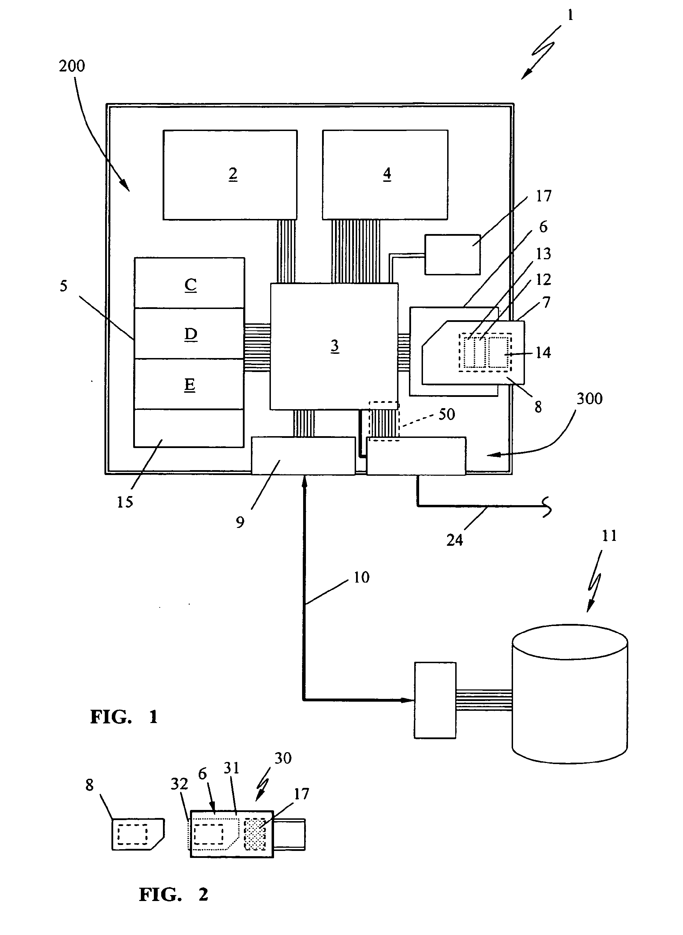

In Fig. 1 ist ein Diagnosegerät 1 am Bespiel eines PC-Kerns 200 mit einer Kraftfahrzeugelektronik 300 gezeigt. Der PC-Kern 200 umfasst ein BIOS 2 zum Hochfahren des Systems, einen zentralen Prozessor 3 (Hauptprozessor), einen Arbeitsspeicher 4 sowie einen Massenspeicher 5, in dem z. B. ein Standardbetriebssystem zum Betrieb des Diagnosegerätes 1 und/oder Anwendungsprogramme und/oder Daten abgespeichert sind. Das Diagnosegerät 1 weist ferner eine Leseeinheit 6, insbesondere eine Schreib/Leseeinheit 6 für eine Smart Card 8 auf, also eine Karte mit einem Kryptoprozessor 14 und zumindest einem Kryptobereich 12 ist. Derartige Chip-Karten werden auch als SIM-Karten (Subscriber Identity Modul) bezeichnet.

Auf der Smart Card 8 sind - z. B. in einem öffentlichen, zweckmäßig durch ein Kennwort (PIN Code) geschützten Bereich 13 - spezifische Kenndaten des Diagnosegerätes 1 gespeichert, z. B. die Verbindungsdaten in einem Netzwerk wie das genutzte Gateway, die IP-Adresse des anzurufenden Backend Servers oder dgl.. Die Smart Card 8 kann ferner das Diagnosegerät 1 eindeutig identifizierende lokale Kenndaten und z. B. Informationen über die genutzte Software und ihre Einstellungen und dgl. enthalten oder berechtigte Benutzer in Form einer verschlüsselten Datei auf dem Massenspeicher durch Kryptografieverfahren schützen.

Das Diagnosegerät 1 weist ferner eine Schnittstelle 9 mit einer Netzwerkverbindung 10 zu einem Server 11 auf. Auf dem Server 11 sind Datenfiles z. B. zu Betriebssystemsoftware oder Anwendungssoftware gespeichert, die zum Betrieb des Diagnosegerätes 1 notwendig oder zweckmäßig sind.

Das Diagnosegerät 1 kann in unterschiedlichen Betriebsmodi betrieben werden. Hierzu ist einmal in einem bootfähigen Permanentspeicher 17 wie eine Flash Card oder dgl. ein Startbetriebssystem abgelegt, das ein Hochfahren des Systems auf Kommunikationsbasis möglich macht. Ferner ist im Massenspeicher 5, vorzugsweise einer Festplatte, ein Standardbetriebssystem abgelegt, unter dem das System im Normalbetrieb hochgefahren und vom Benutzer genutzt wird. Der als Festplatte ausgebildete Massenspeicher kann partitioniert sein, z. B. in Partitionen C, D und E. Bevorzugt ist auf der Festplatte auch eine Hidden-Partition 15 ausgebildet, die auch als Zwischenspeicher für das Startbetriebssystem genutzt werden kann.

Zum Starten des Systems muss vom Benutzer zunächst entschieden werden, ob das Diagnosegerät 1 mit dem Startbetriebssystem hochzufahren ist oder mit dem Standardbetriebssystem. Wird mit dem Startbetriebssystem gebootet, hat der Benutzer keine oder nur stark eingeschränkte Eingriffsmöglichkeiten. Das Startbetriebssystem dient dem Aufbau einer gesicherten SSL-Verbindung zu einem Backend System wie dem Server 11 und arbeitet zweckmäßig eine fest vorgegebene Routine ab, die der Benutzer nicht oder nur unwesentlich beeinflussen kann. Damit werden Manipulationen durch den Benutzer verhindert.

Beim Booten des Diagnosegerätes 1 wird das Startbetriebssystem in den Prozessor 3, nämlich dem Hauptprozessor des Diagnosegerätes 1 geladen. Dieses Startbetriebssystem baut zunächst eine Kommunikationsverbindung mit der Schreib-/Leseeinheit 6 und der darin vorzugsweise auswechselbar eingeschobenen Smart Card 8 auf. Über das in den Hauptprozessor 3 geladene Startbetriebssystem wird dann eine Netzwerkverbindung 10 zu dem Backend System wie dem Server 11 hergestellt; dabei werden die Informationen für eine sichere, verschlüsselte SSL-Verbindung mit dem Server 11 verwendet, die das System aus der Kommunikation mit der Smart Card 8 erhält. Über die hergestellte sichere, verschlüsselte Netzwerkverbindung 10 können nun Datenfiles in den Massenspeicher 5 des Diagnosegerätes 1 geladen werden, die zum Betrieb des Diagnosegerätes 1 für den vorgesehenen Anwendungsfall erforderlich sind.

Durch die Verwendung des Startbetriebssystems aus dem Permanentspeicher 17 ist der im Ausführungsbeispiel schematisch dargestellte PC-Kern 200 nicht im angreifbaren "Normalmodus", nämlich dem Standardbetriebssystem betrieben, in dem der Benutzer oder ein Dritter Möglichkeiten eines Systemeingriffs hat. Das Startbetriebssystem stellt abgekoppelt von dem Standardbetriebssystem eine sichere Verbindung mit dem Update- oder Datenserver her. Da das Startbetriebssystem auf dem internen Permanentspeicher 17 abgelegt ist, der im Betrieb des Startbetriebssystem vorzugsweise nicht zu beschreiben ist und auch unter den Standardbetriebssystem nicht als Laufwerk angezeigt und daher nicht zu beschreiben ist, können Manipulationen an dem Startbetriebssystem durch einen Angriff von außen weitgehend ausgeschlossen werden. Die von dem Diagnosegerät 1 empfangenen Daten werden anhand der Informationen der Smart Card 8, z. B. Sicherheitszertifikate oder Public Keys geprüft und nur dann zugelassen, wenn die Authentizität der Daten sichergestellt ist. Auf die im Kryptobereich 12 der Smart Card 8 abgelegten Private Keys bzw. entsprechende Zertifikate kann nur über den Kryptoprozessor 14 zugegriffen werden, so dass ein öffentlicher Zugang zu diesen Daten nach geltenden Maßstäben ausgeschlossen werden kann. Der Kryptoprozessor 14 meldet nach einer Überprüfung der Authentizität der empfangenen Daten nur die Information, ob die Daten authentisch oder verfälscht sind. Entsprechend werden die Daten vom Standardbetriebssystem weiterverarbeitet oder verworfen.

Mit den vorzugsweise auf der Smart Card 8 im PIN geschützten Speicherbereich 13 gespeicherten spezifischen Kenndaten wird zunächst der Server 11 angerufen, um die Netzwerkverbindung 10 aufzubauen. Steht die Verbindung, wird das Verbindungszertifikat 20 überprüft, um zu gewährleisten, dass die Netzwerkverbindung 10 authentisch ist. Diese Überprüfung erfolgt über die Smart Card 8 bzw. den darauf integrierten Kryptoprozessor 14. Nun steht die sichere Datenverbindung von dem Diagnosegerät 1 zum Server 11 und vom Server 11 zum Diagnosegerät 1. Über die sichere SSL-Netzwerkverbindung 10 werden nun Datenfiles, Software wie die Betriebssoftware oder eine Anwendungssoftware übertragen, über den Kryptochip auf Authentizität überprüft und bei bestandener Prüfung weiter verarbeitet, z. B. auf dem Massenspeicher 5 an vorgegebener Stelle abgelegt.

Über die sichere, verschlüsselte Netzwerkverbindung 10 kann das Diagnosegerät 1 vom Server 11 notwendige Betriebssoftware oder Anwendungssoftware sowohl für den PC-Kern und/oder die Kraftfahrzeugelektronik laden bzw. updaten, ohne dass eine Manipulation durch einen Dritten möglich ist.

Das im Permanentspeicher 17 gespeicherte Startbetriebssystem ist vorteilhaft eine Open Source Software, im Ausführungsbeispiel eine LINUX (eingetragene Marke) Software. Diese Software ist einfach aufgebaut und benötigt nur geringe Ressourcen, so dass sie als Startbetriebssystem beim Hochfahren (Booten) eines Diagnosegerätes 1 besonders geeignet ist. Als Startbetriebssystem ist auch WINDOWS CE oder eine ähnliche Betriebssoftware zweckmäßig.

In der Praxis werden derartige Diagnosegeräte 1 im Regelfall unter WINDOWS (eingetragene Marke) Betriebssystemen betrieben. Nach einer Weiterbildung der Erfindung ist vorgesehen, dass sowohl unter dem Startbetriebssystem als auch unter einem anderen Standardbetriebssystem das Diagnosegerät 1 eine Kommunikation mit der Smart Card 8 in der Schreib-/Leseeinheit 6 aufbauen kann, so dass die Zertifikate 20 unter dem Startbetriebssystem ebenso wie unter dem Standardbetriebssystem dem Diagnosegerät 1 zugänglich sind.

Im Ausführungsbeispiel nach Figur 2 ist schematisch ein bootfähiger USB Stick 30 gezeigt, in dessen Gehäuse 31 der Permanentspeicher 17 ebenso integriert ist wie die Schreib-/Leseeinheit 6 für die Smart Card 8. Zweckmäßig wird die eingeschobene Smart Card 8 im wesentlichen vollständig im Gehäuse 31 des USB Sticks 30 aufgenommen, so dass nur eine schmale Griffkante 32 aus dem Gehäuse heraussteht. Durch Einstecken des Sticks 30 in einen vorzugsweise internen USB Anschluss des PC-Kerns und Booten von dem USB Stick 30 kann das Startbetriebssystem mit weitgehend allen Sicherheitsfeatures genutzt werden.

Das Startbetriebssystem umfasst vorteilhaft eine Updatesoftware, mit der das vorhandene Diagnosegerät 1 ohne Eingriff von außen automatisch mit der notwendigen Betriebssoftware und Anwendungssoftware für den PC-Kern und/oder die Kraftfahrzeugelektronik geladen werden kann.

Dabei ist im Gesamtsystem vorgesehen, ein Diagnosegerät 1 als "Master" in gewünschter Art auszurüsten, bis dieses Master-Diagnosegerät 1 alle notwendige Software enthält, die auf den Clients zu installieren ist. Dabei wird eine Vektortabelle 16 der Speicherorte aller Programmfiles auf dem Massenspeicher 5, nämlich einer Festplatte erfasst und die Vektortabelle 16 als Speicherinformation mit den Datenfiles in der Datenbank des Servers 11 abgespeichert. Diese Vektortabelle 16 wird bei erster Inbetriebnahme des Diagnosegeräts in eine Hidden Partition 15 des Massenspeichers abgelegt. Entsprechend der Vektortabelle 16 des Master-Diagnosegerätes 1 wird bei einer ersten Inbetriebnahme eines Client-Diagnosegerätes 100 deren Massenspeicher 5 zunächst in Volumes partitioniert, beispielsweise in Volumes C, D, E. Nach dem Partitionieren kann das auf einem Flashspeicher 17 abgespeicherte Start- bzw. Updatebetriebssystem in die C Partition geladen werden und das System von der C-Platte oder dem Permanentspeicher 17 neu gebootet werden. Nach dem Booten des Client-Diagnosegerätes 100 mit dem Start- bzw. Updatebetriebssystem und nach Herstellung der sicheren SSL-Verbindung unter Nutzung der Daten (Zertifikate 20) der Smart Card 8 wie vorstehend beschrieben wird vom Server 11 das Betriebssystem und die Anwendungssoftware geladen und entsprechend der Vektortabelle 16 auf dem Massenspeicher 5 (Festplatte) des Client abgelegt.

Nachdem die Betriebssoftware und die Anwendersoftware auf den Massenspeicher 5 überspielt sind, wird das System erneut rebootet; in einem Speicher 18 - z. B. dem Flash-Speicher 17 - sind spezifische Merkmale abgelegt. Da das Aufspielen der Datenfiles unter dem LINUX Betriebssystem erfolgt ist, werden beim ersten Hochfahren mit dem geladenen Standardbetriebssystem die Accesslisten, Attribute usw. der gespeicherten Files geändert oder gesetzt, so dass die Datenfiles unter dem WINDOWS Standardbetriebssystem verarbeitet werden können. Das Diagnosegerät 100 eines Clients ist - ohne dass ein Benutzer am System tätig werden musste - betriebsfertig installiert. Die Smart Card 8 kann auch die Funktion eines Softwaredongles übernehmen. Wird z. B. ein Clientsystem gestartet, kann die Standardbetriebssoftware in üblicher Weise das System hochfahren. Beim Starten einer Anwendersoftware kann eine Abfrage auf eine Lizenzdatei erfolgen, die über kryptografische Verfahren der Smart Card gesichert wurde, ob der Client berechtigt ist, die Anwendersoftware zu nutzen, d. h., ob der Client die Lizenz hat. Eine Lizenzdatei kann mit dem Booten in das Startbetriebssystem ausgetauscht bzw. mit aktualisierten, neuen Lizenzinformationen hinterlegt werden. So können zeitlich auslaufende Lizenzen zentral verwaltet und das Starten einer Anwendungssoftware unterbunden werden, wenn die Lizenz abgelaufen ist. Der Benutzer hat ferner die Möglichkeit, z. B. eine zentrale Rufnummer zur Verlängerung seiner Lizenz anzurufen, so dass - nach Freischaltung auf dem Server 11 - bei einem erneuten Startversuch der Anwendersoftware die Rückfrage nach dem Booten des Startbetriebssystems über die verschlüsselte SSL-Datenverbindung ein Starten der dann wieder freigeschalteten Software erlaubt. Die - zeitlich befristete - Lizenz wird, mit kryptografischen Verfahren gesichert , auf dem Massenspeicher 5 abgelegt, so dass ohne Rückfrage beim Server 11 die Anwendersoftware gestartet werden kann, wenn die Lizenzüberprüfung mit den Informationen der Smart Card 8 positiv ist.

Soll ein Update durchgeführt werden, so wird dieses Update zunächst bei dem Master-Diagnosegerät sowohl für den PC-Kern als auch für die Kraftfahrzeugelektronik ausgeführt. Dies führt dazu, dass sich die Werte in der Vektortabelle 16 ändern, sofern Files geändert bzw. Attribute geändert worden sind. Mit dem Starten eines Client-Diagnosegerätes 100 wird das Start- bzw. Updatebetriebssystem nun zunächst - wie vorstehend beschrieben - eine sichere SSL-Datenverbindung zum Server 11 aufbauen und in einem ersten Schritt die Vektortabelle 16 in der Hidden Partition 15 des Massenspeichers 5 mit der aktuellen Vektortabelle des Servers 11 vergleichen. Ohne dass das Standardbetriebssystem oder die Anwendersoftware hochgefahren werden müssen, kann aufgrund eines Vergleichs der Vektortabelle ein notwendiges Update festgestellt werden. Dieses Update beschränkt sich dabei nur auf die geänderten Files oder Attribute, so dass der Datenverkehr auf der Netzwerkverbindung auf ein Minimum reduziert ist. Die Updatebetriebssoftware überschreibt nur die geänderten Files und Attribute; alle anderen Merkmale bleiben unverändert.

Nach Abschluss des Updatevorgangs wird das System rebootet, wodurch das Standardbetriebssystem hochfährt und die Änderungen wirksam werden.

Im Ausführungsbeispiel ist die Erfindung anhand eines PC-Kerns in einem Diagnosegerät beschrieben und erläutert worden. Mit dem gleichen Verfahren und entsprechender Ausbildung sind auch Access-Points, Steuerungen in Fertigungsanlagen und dgl. Geräte zu betreiben.

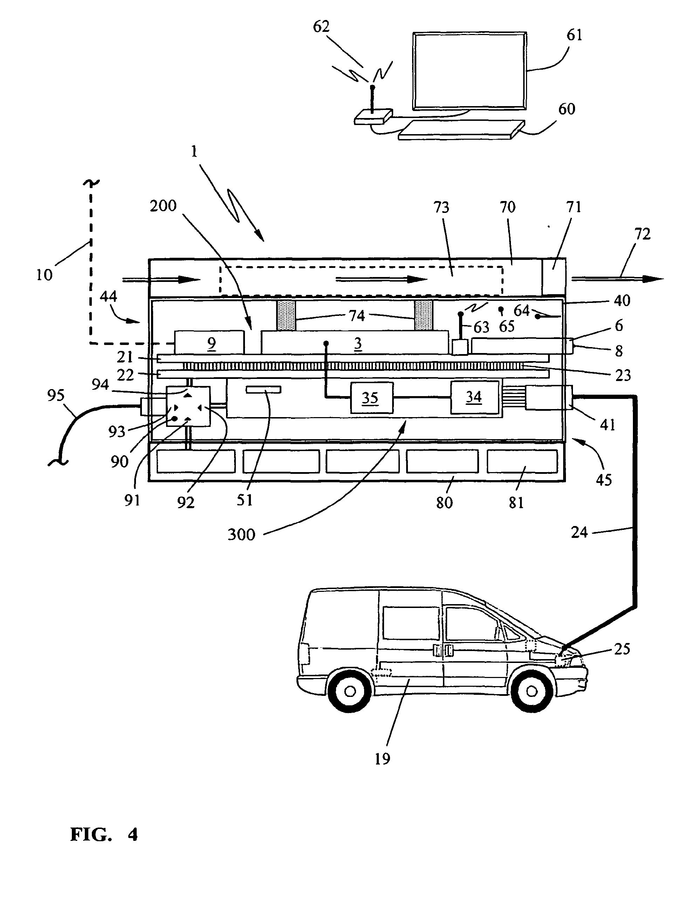

Das in Fig. 1 schematisch dargestellte Diagnosegerät 1 ist in Fig. 4 schematisch in Anwendung bei einem Kraftfahrzeug wiedergegeben.

Das Diagnosegerät 1 besteht im Wesentlichen aus einem Gehäuse 14, in dem sowohl der PC-Kern 200 als auch die Kraftfahrzeugelektronik 300 angeordnet sind. Dieses gemeinsame Gehäuse von PC-Kern 200 und Kraftfahrzeugelektronik 300 ist staub- und flüssigkeitsdicht ausgeführt; das Gehäuse 40 entspricht bevorzugt einer IP-Schutzklasse von IP 65, IP 67 oder höher.

Der PC-Kern 200 mit dem BIOS, dem Prozessor 3, dem Massenspeicher und dem Arbeitsspeicher ist auf einer PC-Platine 21 angeordnet. Die Kraftfahrzeugelektronik 300 ist auf einer davon getrennten Platine 22 angeordnet, wobei beide Platinen 21 und 22 über eine Steckverbindung 23 elektrisch leitend miteinander verbunden sind. Dabei bilden der PC-Kern 200 und die Kraftfahrzeugelektronik 300 eine gemeinsame embedded Plattform.

Das geschlossene, vorteilhaft staubdichte und flüssigkeitsdichte Gehäuse 40 weist im Ausführungsbeispiel einen Steckanschluss 41 zur Kabelverbindung mit dem Steuergerät 25 eines Kraftfahrzeuges 19 auf. Anstelle der vorgesehenen Verbindungsleitung 24 kann eine drahtlose Verbindung zweckmäßig sein.

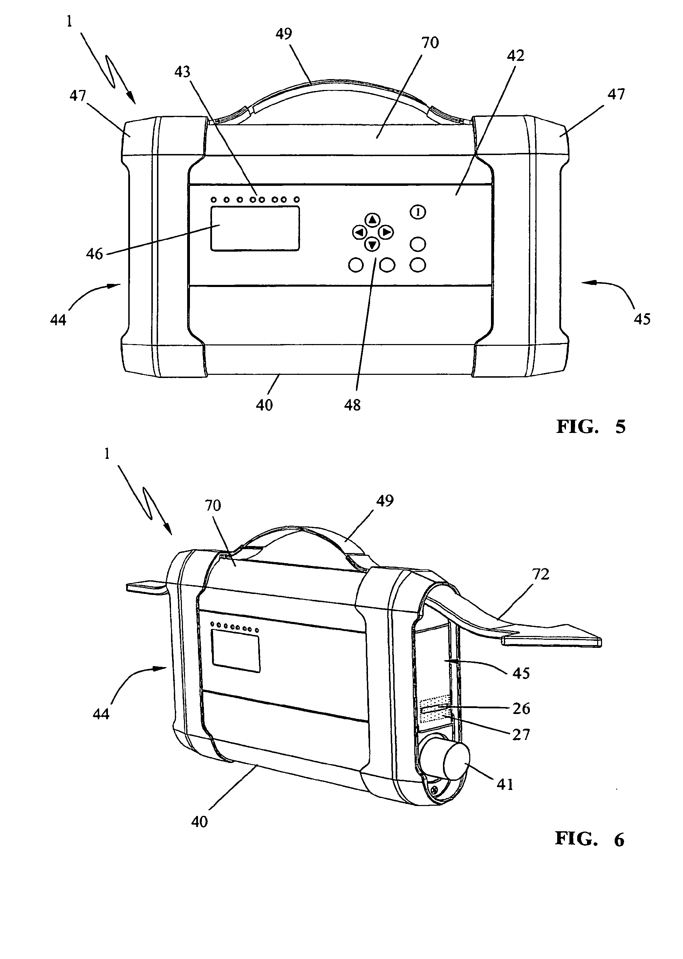

Das Gehäuse 40 weist ferner einen Durchtritt für den Einsteckschlitz 26 der Schreib-/Leseeinheit 6 auf; bevorzugt ist der Schlitz 26 in einer Schmalseite des Gehäuses 40 - Fig. 6 - ausgebildet und wird durch einen Verschluss 27, einen Bumper oder dgl., insbesondere staub- und flüssigkeitsdicht verschlossen.

Die Kraftfahrzeugelektronik 300 umfasst einen Kommunikationsprozessor 35, der vorteilhaft von dem Prozessor 3 des PC-Kerns 200 angesteuert ist und entsprechend seiner Ansteuerung die Kommunikationsschnittstelle 34 steuert, über die der Datenverkehr vom Kraftfahrzeug 19 zum PC-Kern 200 erfolgt. Der Kommunikationsprozessor 35, z. B. ein Prozessor des Typs XC161, steuert die Kommunikationsschnittstelle 34 entsprechend dem angeschlossenen Fahrzeug, der Version des Steuergerätes 25 und der gestarteten Diagnosesoftware bzw. Anwendersoftware.

Die Kommunikation zwischen der Kraftfahrzeugelektronik 300 und dem PC-Kern 200 erfolgt über eine sichere Verbindung 50 (Fig. 1), wobei diese verschlüsselte Verbindung dann und nur dann zustande kommt, wenn der Schlüssel eines in der Kraftfahrzeugelektronik vorgesehenen Hardwarebausteins 51, insbesondere eines entsprechenden Logikbausteins mit dem Schlüssel zusammenpasst, der durch Auslesen eines Sicherheitszertifikates auf der Smart Card 8 vom PC-Kern 200 festgestellt wird. Ist der Austausch der Schlüssel erfolgreich, wird die Kommunikationsverbindung 50 zwischen der Kraftfahrzeugelektronik 300 und dem PC-Kern 200, vorzugsweise dessen Prozessor 3, freigeschaltet.

Das ablaufende Diagnoseprogramm kann vom Benutzer durch eine externe Tastatur 60 entsprechend den Programmvorgaben gesteuert und die entsprechenden Ausgaben auf einem ebenfalls externen Bildschirm 61 angezeigt werden. Tastatur 60 und/oder Bildschirm 61 sind drahtlos über eine entsprechende Funkstrecke 62 mit dem PC-Kern 200 verbunden, so dass dieser über ein geeignetes Remote Protokoll mit Tastatur 60 und Bildschirm 61 kommuniziert. Um eine gute Funkverbindung zu gewährleisten, ist innerhalb des Gehäuses mindestens eine Antenne 63 vorgesehen; insbesondere ist innerhalb des geschlossenen Gehäuses in jeder Raumrichtung x, y und z eine Antenne 63, 64 und 65 angeordnet.

Wie vorstehend beschrieben, kann über die Schnittstelle 9 und eine entsprechende Netzwerkverbindung 10 eine Verbindung mit einem Backend System aufgebaut werden, wobei diese Verbindung - unter Nutzung der Smart Card 8 als SSL-Verbindung - verschlüsselt aufgebaut sein kann.

Im gezeigten Ausführungsbeispiel ist auf der einen Längsseite des Gehäuses ein Kühlluftkanal 70 ausgebildet, in dem von einem Kühlluftgebläse 71 ein vorteilhaft permanenter Kühlluftstrom 72 ausgebildet ist. Der Kühlluftstrom 72 tritt auf einer Schmalseite 44 in den Kühlluftkanal 70 ein und an der anderen Schmalseite 45 des Gehäuses 40 wieder aus. Im Kühlluftkanal 70 ist ein Wärmetauscher 73 angeordnet, dessen Kühlrippen sich zweckmäßig in Längsrichtung des Kühlluftkanals 70 erstrecken. Der Wärmetauscher 73 steht mit Heatpipes 74 in wärmeübertragender Verbindung, um die im geschlossenen Gehäuse 40 anfallende Wärme nach außen abzuführen. Hierzu wird das aus dem dichten Gehäuse 40 herausgeführte Ende der Heatpipes 74 mit dem Wärmetauscher 73 verbunden und von dem Kühlluftstrom 72 gekühlt.

Auf der anderen Längsseite des Gehäuses 40 ist ein Aufnahmeschacht 80 für Akkuzellen 81 vorgesehen. Die Akkuzellen 81 werden bevorzugt von der Schmalseite 44 bzw. 45 als Gesamtpack in den Aufnahmeschacht 80 eingeschoben. Bevorzugt sind die Akkuzellen 81 chemisch auf Lithium basierende Zellen, wie z. B. Lithium-Ionen-Zellen, Lithium-Polymer-Zellen oder dgl..

In besonderer Weiterbildung der Erfindung ist eine Stromsteuereinheit 90 vorgesehen, die zweckmäßig ebenfalls im geschlossenen Gehäuse 40 des Diagnosegerätes 1 angeordnet ist. Die Stromsteuereinheit 90 hat mehrere Eingänge und einen Ausgang 94, der die elektrische Stromversorgung des Diagnosegerätes 1, d. h. des PC-Kerns 200 ebenso wie der Kraftfahrzeugelektronik 300, speist.

Der erste Eingang 91 wird aus dem Akkupack gespeist, während der zweite Eingang 92 über die Kraftfahrzeugelektronik 300 mit dem Bordnetz des Kraftfahrzeugs 19 verbunden ist. Der dritte Eingang 93 wird aus einem Netzteil 95 gespeist.

Die Stromsteuereinheit 90 ist derart ausgelegt, dass eine gleichzeitige Stromversorgung aus allen drei Eingängen 91, 92 und 93 möglich ist. Um Ausgleichsströme zu vermeiden, ist vorgesehen, dass die Stromsteuereinheit 90 eine von Erde getrennte Masse aufweist, deren Potenzial veränderbar ist. Diese schwebende Masse stellt sicher, dass nicht aufgrund eines Potenzialunterschiedes der Masse im Kraftfahrzeug, der Masse im Diagnosegerät und der Masse am Netzteil schädliche Ausgleichsströme fließen können.

In Fig. 5 ist das Diagnosegerät in einer möglichen körperlichen Ausführungsform dargestellt. Das Gehäuse 40 ist an seinen Schmalseiten 44 und 45 mit Bumpern 47 versehen, die die schmalseitigen Enden des Gehäuses 40 umfassen. Auf der breiten Gehäuseseite 42 sind Kontrollleuchten 43, ein kleines Anzeigefeld 46 z. B. in Form eines Displays sowie Funktionstasten 48 vorgesehen. An seiner den Kühlluftkanal aufweisenden Seite ist an dem Gehäuse eine Tragschlaufe 49 zum Tragen des Diagnosegerätes befestigt.

Wie aus Fig. 6 zu ersehen, durchströmt der Kühlluftstrom 72 den Kühlluftkanal 70 unterhalb der Tragschlaufe 49. In der in Fig. 6 rechts dargestellten Schmalseite 45 ist der Einführschlitz 26 der Schreib-/Leseeinheit zu sehen; zum Verschließen des Schlitzes 26 ist ein Verschlusselement 27 vorgesehen. Der Steckanschluss 41 dient zur Verbindung mit der mehradrigen Verbindungsleitung 24 zum Kraftfahrzeug 19.

## Patentansprüche

1. Diagnosegerät zur Verbindung mit einem Steuergerät (25) in einem Kraftfahrzeug (19), mit einem im Gehäuse (40) des Diagnosegerätes (1) vorgesehenen PC-Kern (200) aus einem Prozessor (3) sowie einem Arbeitsspeicher (4) und einem Massenspeicher (5) zum Speichern von Datenfiles eines Betriebssystems, mit einer mit dem PC-Kern (200) verbundenen Leseeinheit (6) mit einer Smart Card (8), auf der systemspezifische Kenndaten gespeichert sind, mit einer mit dem Steuergerät (25) des Kraftfahrzeugs (19) verbundenen Kraftfahrzeugelektronik (300) des Diagnosegerätes zur elektrischen Kommunikation mit dem Kraftfahrzeug (19), umfassend eine von einem Kommunikationsprozessor (35) gesteuerte Schnittstelle (34) zur Umsetzung der zwischen der Kraftfahrzeugelektronik (300) im Diagnosegerät und dem Steuergerät (25) im Kraftfahrzeug (19) auszutauschenden Daten, sowie mit einer Netzwerkschnittstelle (9) zum Aufbau einer Netzwerkverbindung (10) zu einem Server (11), der Datenfiles zum Betrieb des Diagnosegerätes (1) bereitstellt, wobei der PC-Kern (200) und die Kraftfahrzeugelektronik (300) des Diagnosegerätes in einem gemeinsamen, staub- und feuchtigkeitsdicht geschlossenen Gehäuse (40) angeordnet sind, und die Kraftfahrzeugelektronik (300) mit dem PC-Kern (200) **gehäuseintern** über eine verschlüsselte Verbindung (50) kommuniziert, die durch einen Schlüssel eines Hardwarebausteins (51) in der Kraftfahrzeugelektronik (300) des Diagnosegerätes und einem Sicherheitszertifikat (20) auf der Smart Card (8) hergestellt ist, derart, dass nur zugelassene Diagnoseprogramme auf das jeweils angeschlossene Steuergerät (25) des Kraftfahrzeugs (19) zugreifen können.

2. Diagnosegerät nach Anspruch 1,
**dadurch gekennzeichnet, dass** der PC-Kern (200) und die Kraftfahrzeugelektronik (300) über eine Steckverbindung (23) miteinander verbunden sind.

3. Diagnosegerät nach einem der Ansprüche 1 oder 2,
**dadurch gekennzeichnet, dass** der PC-Kern (200) und die Kraftfahrzeugelektronik (300) eine gemeinsame embedded Plattform bilden.

4. Diagnosegerät nach einem der Ansprüche 1 bis 3,
**dadurch gekennzeichnet, dass** über eine drahtlose Verbindung (62) ein externer Bildschirm (61) und/oder eine externe Tastatur (60) an den PC-Kern (200) angeschlossen ist und über ein Remote Protokoll kommuniziert

5. Diagnosegerät nach Anspruch 4,
**dadurch gekennzeichnet, dass** für die drahtlose Verbindung (62) innerhalb des Gehäuses (40) mindestens eine Antenne (63), insbesondere eine Antenne (63, 64, 65) in jeder Raumrichtung angeordnet ist.

6. Diagnosegerät nach einem der Ansprüche 1 bis 5,
**dadurch gekennzeichnet, dass** an einer Längsseite des Gehäuses (40) ein von einem Kühlluftstrom (71) durchströmter Kühlkanal (70) ausgebildet ist, der ein Ende einer in das dichte Gehäuse (40) führenden Heatpipe (74) kühlt.

7. Diagnosegerät nach einem der Ansprüche 1 bis 6,
**dadurch gekennzeichnet, dass** an einer Längsseite des Gehäuses (40) ein Aufnahmefach (80) für einen Akkupack (81) angeordnet ist.

8. Diagnosegerät nach Anspruch 7,
**dadurch gekennzeichnet, dass** der Akkupack (81) an eine Stromsteuereinheit (90) angeschlossen ist, deren weitere Eingänge (91, 92, 93) aus dem Bordnetz des Kraftfahrzeugs (19) und/oder von einem Netzteil (95) gespeist sind.

9. Diagnosegerät nach Anspruch 8,
**dadurch gekennzeichnet, dass** die Stromsteuereinheit (90) eine von Erde getrennte Masse aufweist, deren Potenzial veränderlich ist.

10. Diagnosegerät nach einem der Ansprüche 1 bis 9,
**dadurch gekennzeichnet, dass** in einem bootfähigen Permanentspeicher (17) des PC-Kerns (200) ein Startbetriebssystem abgespeichert ist, wobei über das in den Prozessor (3) geladene Startbetriebssystem eine Kommunikationsverbindung mit der Smart Card (8) aufgebaut ist, dass über das in den Prozessor (3) geladene Startbetriebssystem die Netzwerkverbindung (10) zu dem Server (11) hergestellt ist, und dass mittels den aus der Kommunikation mit der Smart Card (8) erhaltenen Informationen die Netzwerkverbindung mit dem Server (11) als eine sichere, verschlüsselte SSL-Netzwerkverbindung (10) hergestellt ist, wobei über die hergestellte sichere, verschlüsselte Netzwerkverbindung (10) die Datenfiles in den Massenspeicher (5) des PC-Kerns (200) zu laden sind.

11. Diagnosegerät nach Anspruch 10,
**dadurch gekennzeichnet, dass** auf der Smart Card (8) ein Kryptoprozessor (14) integriert ist und im Kryptobereich (12) der Smart Card (8) ein Verbindungszertifikat für die Erstellung einer sicheren Verbindung abgelegt ist.

12. Diagnosegerät nach Anspruch 10,
**dadurch gekennzeichnet, dass** der integrierte Permanentspeicher (17) unter einem Standardbetriebssystem als versteckter Speicher nicht als Laufwerk angezeigt und vorzugsweise mit einem Schreibschutz gegen Beschreiben gesichert ist.

13. Diagnosegerät nach einem der Ansprüche 10 bis 12,
**dadurch gekennzeichnet, dass** der integrierte Permanentspeicher (17) ein Speicherbaustein ist, insbesondere ein bootfähiger USB Stick (30) ist.

14. Diagnosegerät nach Anspruch 13,
**dadurch gekennzeichnet, dass** im USB Stick (30) die Schreib-/Leseeinheit (6) für die Smart Card (8) integriert ist.

## Claims

1. Diagnostic device for connection to a control unit (25) in a motor vehicle (19), comprising a PV core (200) accommodated in the housing (40) of the diagnostic device (1) and consisting of a processor (3), a random access memory (4) and a mass storage device (5) for storing data files of an operating system, further comprising a reading unit (6) connected to the PV core (200) and including a smart card (8) on which system-specific ratings are stored, further comprising motor vehicle electronics (300) of the diagnostic device, which are connected to the control unit (25) of the motor vehicle (19) for electric communication with the motor vehicle (19), and which include an interface (34) controlled by a communication processor (35) for converting the data to be exchanged between the motor vehicle electronics (300) in the diagnostic device and the control unit (25) in the motor vehicle (19), and further comprising a network interface (9) for establishing a network connection (10) to a server (11) which makes available data files for the operation of the diagnostic device (1), wherein the PC core (200) and the motor vehicle electronics (300) of the diagnostic device are accommodated in a common dust- and moisture-proof housing (40) and wherein the motor vehicle electronics (300) communicate with the PC core (200) within the housing via an encrypted connection (50) represented by a key of a hardware component (51) of the motor vehicle electronics (300) of the diagnostic device and a security certificate (20) on the smart card (8) in such a way that only authorised diagnostic programmes can access the connected control unit (25) of the motor vehicle (19).

2. Diagnostic device according to claim 1,
**characterised in that** the PC core (200) and the motor vehicle electronics (300) are connected to one another by a plug-and-socket connection (23).

3. Diagnostic device according to claim 1 or 2,
**characterised in that** the PC core (200) and the motor vehicle electronics (300) form a jointly embedded platform.

4. Diagnostic device according to any of claims 1 to 3,
**characterised in that** an external screen (61) and/or an external keyboard (60) is/are connected to the PC core (200) via a wireless connection (62) and communicate using a remote protocol.

5. Diagnostic unit according to claim 4,
**characterised in that** at least one aerial (63), in particular an aerial (63, 64, 65) in each direction in space, is provided for the wireless connection (62) within the housing (40).

6. Diagnostic device according to any of claims 1 to 5,
**characterised in that** a cooling passage (70) through which a cooling air stream (71) flows and which cools an end of a heat pipe leading into the sealed housing (40) is formed on a long side of the housing (40).

7. Diagnostic device according to any of claims 1 to 6,
**characterised in that** a compartment (8) for a battery pack (81) is provided on a long side of the housing (40).

8. Diagnostic unit according to claim 7,
**characterised in that** the battery pack (81) is connected to a current control unit (90), the further inputs (91, 92, 93) of which are fed from the electrical system of the motor vehicle (19) and/or from a power unit (95).

9. Diagnostic unit according to claim 8,
**characterised in that** the current control unit (90) has a mass separated from earth and having a variable potential.

10. Diagnostic device according to any of claims 1 to 9,
**characterised in that** a start operating system is stored in a bootable non-volatile memory (17) of the PC core (200), wherein a communication link to the smart card (8) is built up via the start operating system loaded into the processor (3), **in that** a network connection (10) to the server (11) is established via the start operating system loaded into the processor (3), and **in that**, by means of the data received from the communication with the smart card (8), the network connection to the server (11) is established as a secure, encrypted SSL network connection (10), wherein the data files are to be loaded into the mass storage device (5) of the PC core (200) via the secure, encrypted network connection (10) thus established.

11. Diagnostic device according to claim 10,
**characterised in that** a cryptoprocessor (14) is integrated on the smart card (8) and a connection certificate for the establishment of a secure connection is stored in the crypto-region (12) of the smart card (8).

12. Diagnostic device according to claim 10,
**characterised in that** the integrated non-volatile memory (17) is, under a standard operating system, as a hidden memory not indicated as a drive and preferably secured against writing by write protect.

13. Diagnostic device according to any of claims 10 to 12,
**characterised in that** the integrated non-volatile memory (17) is a memory component, in particular a bootable USB stick (30).

14. Diagnostic device according to claim 13,
**characterised in that** a read/write unit (6) for the smart card (8) is integrated into the USB stick (30).

## Revendications

1. Appareil de diagnostic à relier à un appareil de commande (25) dans un véhicule automobile (19), avec un noyau de PC (200) qui est prévu dans le boîtier (40) de l'appareil de diagnostic (1) et qui se compose d'un processeur (3) ainsi que d'une mémoire de travail (4) et d'une mémoire de masse (5) pour stocker des fichiers de données d'un système d'exploitation, avec une unité de lecture (6) qui est reliée au noyau de PC (200) et qui est pourvue d'une carte à puce (8) sur laquelle sont stockées des caractéristiques propres au système, avec une électronique de véhicule automobile (300) de l'appareil de diagnostic qui est reliée à l'appareil de commande (25) du véhicule (19), qui est destinée à la communication électrique avec le véhicule (19) et qui comprend une interface (34) commandée par un processeur de communication (35) et destinée à transférer les données à échanger entre l'électronique de véhicule automobile (300) dans l'appareil de diagnostic et l'appareil de commande (25) dans le véhicule (19), et avec une interface de réseau (9) pour établir une liaison de réseau (10) avec un serveur (11) qui fournit des fichiers de données pour le fonctionnement de l'appareil de diagnostic (1), étant précisé que le noyau de PC (200) et l'électronique de véhicule automobile (300) de l'appareil de diagnostic sont disposés dans un boîtier commun (40) fermé de manière étanche à la poussière et à l'humidité, et ladite électronique (300) communique avec le noyau (200), à l'intérieur du boîtier, grâce à une liaison codée (50) qui est réalisée à l'aide d'une clé d'un composant de matériel (51) dans l'électronique (300) de l'appareil de diagnostic et d'un certificat de sécurité (20) sur la carte à puce (8), de telle sorte que seuls des programmes de diagnostic autorisés puissent avoir accès à l'appareil de commande raccordé (25) du véhicule (19).

2. Appareil de diagnostic selon la revendication 1,
**caractérisé en ce que** le noyau de PC (200) et l'électronique de véhicule automobile (300) sont reliés entre eux par une connexion par fiches (23).

3. Appareil de diagnostic selon l'une des revendications 1 ou 2,
**caractérisé en ce que** le noyau de PC (200) et l'électronique de véhicule automobile (300) forment une plate-forme intégrée commune.

4. Appareil de diagnostic selon l'une des revendications 1 à 3,
**caractérisé en ce que** par l'intermédiaire d'une liaison sans fil (62), un écran externe (61) et/ou un clavier externe (60) sont reliés au noyau de PC (200) et communiquent par l'intermédiaire d'un protocole à distance.

5. Appareil de diagnostic selon la revendication 4,
**caractérisé en ce que** pour la liaison sans fil (62), il est prévu à l'intérieur du boîtier (40) au moins une antenne (63), en particulier une antenne (63, 64, 65), qui est disposée dans chaque direction spatiale.

6. Appareil de diagnostic selon l'une des revendications 1 à 5,
**caractérisé en ce qu'**il est prévu, formé sur un côté longitudinal du boîtier (40), un conduit de refroidissement (70) qui est traversé par un courant d'air de refroidissement (71) et qui refroidit une extrémité d'un tube de chauffe (74) qui mène au boîtier étanche (40).

7. Appareil de diagnostic selon l'une des revendications 1 à 6,
**caractérisé en ce qu'**un compartiment (80) pour un bloc d'accumulateurs (81) est disposé sur un côté longitudinal du boîtier (40).

8. Appareil de diagnostic selon la revendication 7,
**caractérisé en ce que** le bloc d'accumulateurs (81) est raccordé à une unité de commande de courant (90) dont les autres entrées (91, 92, 93) sont alimentées à partir du réseau de bord du véhicule automobile (19) et/ou d'un élément d'alimentation (95).

9. Appareil de diagnostic selon la revendication 8,
**caractérisé en ce que** l'unité de commande de courant (90) présente une masse qui est séparée de la terre et dont le potentiel est variable.

10. Appareil de diagnostic selon l'une des revendications 1 à 9,
**caractérisé en ce qu'**un système d'exploitation de démarrage est stocké dans une mémoire permanente apte à être amorcée (17) du noyau de PC (200), étant précisé que par l'intermédiaire du système d'exploitation de démarrage chargé dans le processeur (3), une liaison de communication est établie avec la carte à puce (8), **en ce que** par l'intermédiaire du système d'exploitation de démarrage chargé dans le processeur (3), la liaison de réseau (10) avec le serveur (11) peut être réalisée, et **en ce qu'**à l'aide des informations obtenues à partir de la communication avec la carte à puce (8), la liaison de réseau avec le serveur (11) est réalisée sous la forme d'une liaison de réseau SSL (10) codée et sûre, étant précisé que par l'intermédiaire de ladite liaison de réseau (10) codée et sûre réalisée, les fichiers de données peuvent être chargés dans la mémoire de masse (5) du noyau de PC (200).

11. Appareil de diagnostic selon la revendication 10,
**caractérisé en ce qu'**un processeur cryptographique (14) est intégré sur la carte à puce (8) et un certificat de liaison est déposé dans la zone cryptographique (12) de la carte à puce (8) pour l'établissement d'une liaison sûre.

12. Appareil de diagnostic selon la revendication 10,
**caractérisé en ce que** la mémoire permanente intégrée (17) n'est pas affichée comme lecteur sous un système d'exploitation standard comme mémoire cachée, et est de préférence protégée contre une écriture grâce à une protection anti-écriture.

13. Appareil de diagnostic selon l'une des revendications 10 à 12,
**caractérisé en ce que** la mémoire permanente intégrée (17) est un composant de mémoire, en particulier une clé USB apte à être amorcée (30).

14. Appareil de diagnostic selon la revendication 13,
**caractérisé en ce que** l'unité de lecture/écriture (6) pour la carte à puce (8) est intégrée dans la clé USB (30).
